# EUROPEAN PATENT APPLICATION

(11) **EP 4 161 020 A1**
(43) Date of publication of application: **05.04.2023**
(21) Application number: 21200220.8
(22) Date of filing: 30.09.2021
(51) Int. Cl.: H04L 41/5041, H04L 41/0803

(54) **APPARATUS, METHODS, AND COMPUTER PROGRAMS**

(71) Applicant: Nokia Solutions and Networks Oy, 02610 Espoo (FI)
(72) Inventor: Mwanje, Stephen, 84405 Dorfen (DE)
(74) Representative: Page White & Farrer

(57) **Abstract**

There is provided an apparatus, method, and computer program for an apparatus for a network function that cause the apparatus to receive, from a service consumer configured to operate in a first network, first signalling comprising a first intent that indicates at least one first objective to be achieved in the first network; determine at least one first target for achieving the at least one first objective; form a second intent that comprises the at least one target; and signal a first trigger to an intent fulfilment system to fulfil the second intent.

## Description

### Field

The present disclosure relates to apparatus, methods, and computer programs, and in particular but not exclusively to apparatus, methods and computer programs for network apparatuses.

### Background

A communication system can be seen as a facility that enables communication sessions between two or more entities such as user terminals, access nodes and/or other nodes by providing resources for communications between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology. Access to a 5G core may also be provided via an alternative network such as, for example, UTRAN or UMTS.

### Summary

[to be completed when finalising] According to a first aspect, there is provided an apparatus for a network function, the apparatus comprising means for: receiving, from a service consumer configured to operate in a first network, first signalling comprising a first intent that indicates at least one first objective to be achieved in the first network; determining at least one first target for achieving the at least one first objective; forming a second intent that comprises the at least one target; and signalling a first trigger to an intent fulfilment system to fulfil the second intent.

**An** objective of the at least one first objective may comprise an identifier of the first intent, an indication of a type of object to which the at least one first objective relates, and an indication of an action to be applied to the object.

Said objective may comprise at least one of an identifier of a context for defining when the objective is to be achieved, and/or an identifier of at least one target associated with the objective.

The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

The apparatus may comprise means for: when the identifier of the context is comprised in said objective: accessing a first lookup table to determine at least one target associated with the identified context; and comprising the at least one target associated with the identified context in the second intent.

The apparatus may comprise means for: when the identifier of the parameter value is comprised in said objective: accessing a second lookup table to determine at least one target associated with the identified parameter value; and comprising the at least one target associated with the identified parameter value in the second intent.

The apparatus may comprise means for: when the identifier of the key performance indicator value is comprised in said objective: accessing a third lookup table to determine at least one target associated with the identified key performance indicator; and comprising the at least one target associated with the identified key performance indicator in the second intent.

The apparatus may comprise means for: receiving, from the service consumer, second signalling comprising a third intent that indicates at least one second objective to be achieved in the first network; determining at least one second target for achieving the at least one second objective; forming a fourth intent that comprises the at least at least one second target; and signalling a second trigger to the intent fulfilment system to fulfil the fourth intent.

The at least one second objective may be a modification of the at least one first objective.

The apparatus may comprise means for: receiving, from the service consumer, third signalling, the third signalling comprising an indication that the at least one first objective to be abandoned; and signalling, to the management service function, an indication that the at least one first target is to be abandoned in response to receiving said third signalling.

The apparatus function may be comprised within a management service function.

According to a second aspect, there is provided an apparatus for a network function, the apparatus comprising: at least one processor; and at least one memory comprising computer code that, when executed by the at least one processor, causes the apparatus to: receive, from a service consumer configured to operate in a first network, first signalling comprising a first intent that indicates at least one first objective to be achieved in the first network; determine at least one first target for achieving the at least one first objective; form a second intent that comprises the at least one target; and signal a first trigger to an intent fulfilment system to fulfil the second intent.

**An** objective of the at least one first objective may comprise an identifier of the first intent, an indication of a type of object to which the at least one first objective relates, and an indication of an action to be applied to the object.

Said objective may comprise at least one of an identifier of a context for defining when the objective is to be achieved, and/or an identifier of at least one target associated with the objective.

The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

The apparatus may be caused to: when the identifier of the context is comprised in said objective: access a first lookup table to determine at least one target associated with the identified context; and comprise the at least one target associated with the identified context in the second intent.

The apparatus may be caused to: when the identifier of the parameter value is comprised in said objective: access a second lookup table to determine at least one target associated with the identified parameter value; and comprise the at least one target associated with the identified parameter value in the second intent.

The apparatus may be caused to: when the identifier of the key performance indicator value is comprised in said objective: access a third lookup table to determine at least one target associated with the identified key performance indicator; and comprise the at least one target associated with the identified key performance indicator in the second intent.

The apparatus may be caused to: receive, from the service consumer, second signalling comprising a third intent that indicates at least one second objective to be achieved in the first network; determine at least one second target for achieving the at least one second objective; form a fourth intent that comprises the at least at least one second target; and signal a second trigger to the intent fulfilment system to fulfil the fourth intent.

The at least one second objective may be a modification of the at least one first objective.

The apparatus may be caused to: receive, from the service consumer, third signalling, the third signalling comprising an indication that the at least one first objective to be abandoned; and signal, to the management service function, an indication that the at least one first target is to be abandoned in response to receiving said third signalling.

The apparatus function may be comprised within a management service function.

According to a third aspect, there is provided a method for an apparatus for a network function, the method comprising: receiving, from a service consumer configured to operate in a first network, first signalling comprising a first intent that indicates at least one first objective to be achieved in the first network; determining at least one first target for achieving the at least one first objective; forming a second intent that comprises the at least one target; and signalling a first trigger to an intent fulfilment system to fulfil the second intent.

**An** objective of the at least one first objective may comprise an identifier of the first intent, an indication of a type of object to which the at least one first objective relates, and an indication of an action to be applied to the object.

Said objective may comprise at least one of an identifier of a context for defining when the objective is to be achieved, and/or an identifier of at least one target associated with the objective.

The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

The method may comprise: when the identifier of the context is comprised in said objective: accessing a first lookup table to determine at least one target associated with the identified context; and comprising the at least one target associated with the identified context in the second intent.

The method may comprise: when the identifier of the parameter value is comprised in said objective: accessing a second lookup table to determine at least one target associated with the identified parameter value; and comprising the at least one target associated with the identified parameter value in the second intent.

The method may comprise: when the identifier of the key performance indicator value is comprised in said objective: accessing a third lookup table to determine at least one target associated with the identified key performance indicator; and comprising the at least one target associated with the identified key performance indicator in the second intent.

The method may comprise: receiving, from the service consumer, second signalling comprising a third intent that indicates at least one second objective to be achieved in the first network; determining at least one second target for achieving the at least one second objective; forming a fourth intent that comprises the at least at least one second target; and signalling a second trigger to the intent fulfilment system to fulfil the fourth intent.

The at least one second objective may be a modification of the at least one first objective.

The method may comprise: receiving, from the service consumer, third signalling, the third signalling comprising an indication that the at least one first objective to be abandoned; and signalling, to the management service function, an indication that the at least one first target is to be abandoned in response to receiving said third signalling.

The apparatus function may be comprised within a management service function.

According to a fourth aspect, there is provided an apparatus for a network function, the apparatus comprising: receiving circuitry for receiving, from a service consumer configured to operate in a first network, first signalling comprising a first intent that indicates at least one first objective to be achieved in the first network; determining circuitry for determining at least one first target for achieving the at least one first objective; forming circuitry for forming a second intent that comprises the at least one target; and signalling circuitry for signalling a first trigger to an intent fulfilment system to fulfil the second intent.

**An** objective of the at least one first objective may comprise an identifier of the first intent, an indication of a type of object to which the at least one first objective relates, and an indication of an action to be applied to the object.

Said objective may comprise at least one of an identifier of a context for defining when the objective is to be achieved, and/or an identifier of at least one target associated with the objective.

The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

The apparatus may comprise: when the identifier of the context is comprised in said objective: accessing circuitry for accessing a first lookup table to determine at least one target associated with the identified context; and comprising circuitry for comprising the at least one target associated with the identified context in the second intent.

The apparatus may comprise: when the identifier of the parameter value is comprised in said objective: accessing circuitry for accessing a second lookup table to determine at least one target associated with the identified parameter value; and comprising circuitry for comprising the at least one target associated with the identified parameter value in the second intent.

The apparatus may comprise: when the identifier of the key performance indicator value is comprised in said objective: accessing circuitry for accessing a third lookup table to determine at least one target associated with the identified key performance indicator; and comprising circuitry for comprising the at least one target associated with the identified key performance indicator in the second intent.

The apparatus may comprise: receiving circuitry for receiving, from the service consumer, second signalling comprising a third intent that indicates at least one second objective to be achieved in the first network; determining circuitry for determining at least one second target for achieving the at least one second objective; forming circuitry for forming a fourth intent that comprises the at least at least one second target; and signalling circuitry for signalling a second trigger to the intent fulfilment system to fulfil the fourth intent.

The at least one second objective may be a modification of the at least one first objective.

The apparatus may comprise: receiving circuitry for receiving, from the service consumer, third signalling, the third signalling comprising an indication that the at least one first objective to be abandoned; and signalling circuitry for signalling, to the management service function, an indication that the at least one first target is to be abandoned in response to receiving said third signalling.

The apparatus function may be comprised within a management service function.

According to a fifth aspect, there is provided non-transitory computer readable medium comprising program instructions for causing an apparatus for a network function to perform at least the following: receive, from a service consumer configured to operate in a first network, first signalling comprising a first intent that indicates at least one first objective to be achieved in the first network; determine at least one first target for achieving the at least one first objective; form a second intent that comprises the at least one target; and signal a first trigger to an intent fulfilment system to fulfil the second intent.

**An** objective of the at least one first objective may comprise an identifier of the first intent, an indication of a type of object to which the at least one first objective relates, and an indication of an action to be applied to the object.

Said objective may comprise at least one of an identifier of a context for defining when the objective is to be achieved, and/or an identifier of at least one target associated with the objective.

The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

The apparatus may be caused to: when the identifier of the context is comprised in said objective: access a first lookup table to determine at least one target associated with the identified context; and comprise the at least one target associated with the identified context in the second intent.

The apparatus may be caused to: when the identifier of the parameter value is comprised in said objective: access a second lookup table to determine at least one target associated with the identified parameter value; and comprise the at least one target associated with the identified parameter value in the second intent.

The apparatus may be caused to: when the identifier of the key performance indicator value is comprised in said objective: access a third lookup table to determine at least one target associated with the identified key performance indicator; and comprise the at least one target associated with the identified key performance indicator in the second intent.

The apparatus may be caused to: receive, from the service consumer, second signalling comprising a third intent that indicates at least one second objective to be achieved in the first network; determine at least one second target for achieving the at least one second objective; form a fourth intent that comprises the at least at least one second target; and signal a second trigger to the intent fulfilment system to fulfil the fourth intent.

**The** at least one second objective may be a modification of the at least one first objective.

**The** apparatus may be caused to: receive, from the service consumer, third signalling, the third signalling comprising an indication that the at least one first objective to be abandoned; and signal, to the management service function, an indication that the at least one first target is to be abandoned in response to receiving said third signalling.

**The** apparatus function may be comprised within a management service function.

According to a sixth aspect, there is provided a computer program product stored on a medium that may cause an apparatus to perform any method as described herein.

According to a seventh aspect, there is provided an electronic device that may comprise apparatus as described herein.

According to an eighth aspect, there is provided a chipset that may comprise an apparatus as described herein.

### Brief description of Figures

Examples will now be described, by way of example only, with reference to the accompanying Figures in which:
**Figures** 1A and 1B show a schematic representation of part of an example 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figures 6 and 7 show example end to end systems for intent driven managed networks;
Figures 8A to 9B illustrate example intent structures;
Figures 10 to 11 show schematic representation of interfaces of functions discussed herein; and
Figure 12 is a flow chart illustrating potential operations that may be performed by an apparatus described herein.

### Detailed description

In the following, certain aspects are explained with reference to mobile communication devices capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems with analogous components (for example, current 6G proposals).

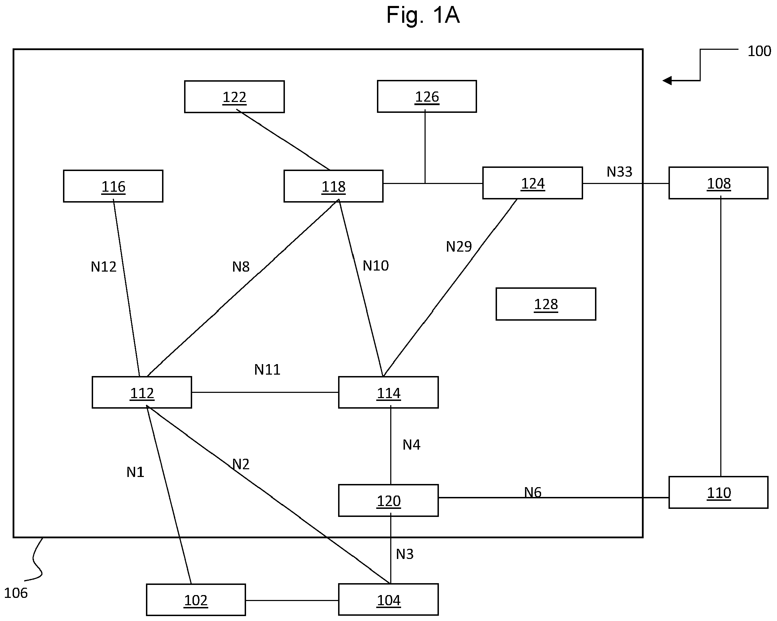

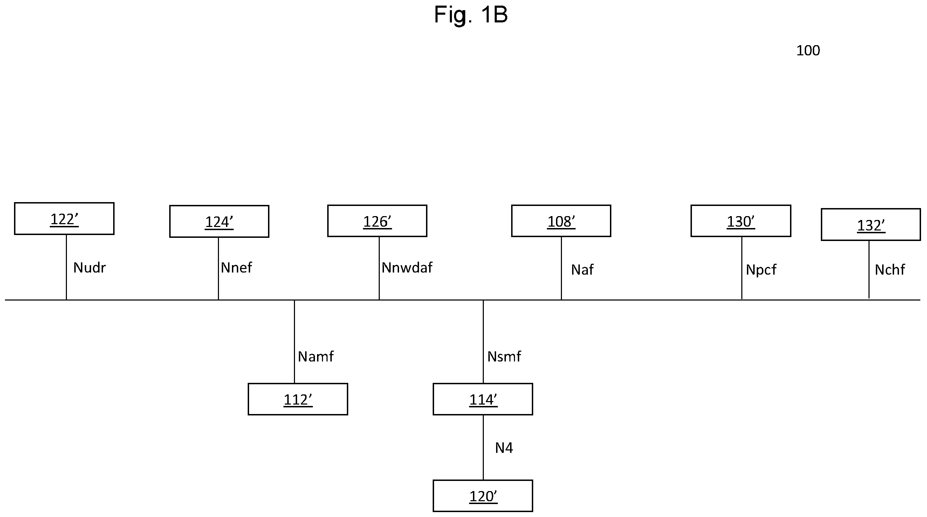

Before explaining in detail the exemplifying embodiments, certain general principles of a 5G wireless communication system are briefly explained with reference to Figures 1A and 1B.

Figure 1A shows a schematic representation of part of an example 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

**The** 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS). The MDAS may provide data analytics of different network related parameters including for example load level and/or resource utilisation. For example, the MDAS for a network function (NF) can collect the NF's load related performance data, e.g., resource usage status of the NF. The analysis of the collected data may provide forecast of resource usage information in a predefined future time. This analysis may also recommend appropriate actions e.g., scaling of resources, admission control, load balancing of traffic, etc.

Figure 1B shows a schematic representation of a 5GC 106' represented in current 3GPP specifications.

Figure 1B shows a UPF 120' connected to an SMF 114' over an N4 interface. The SMF 114' is connected to each of a UDR 122', an NEF 124', an NWDAF 126', an AF 108', a Policy Control Function (PCF) 130', an AMF 112', and a Charging function 132' over an interconnect medium that also connects these network functions to each other.

3GPP refers to a group of organizations that develop and release different standardized communication protocols. 3GPP is currently developing and publishing documents related to Release 16, relating to 5G technology, with Release 17 currently being scheduled for 2022.

The following relates to Cognitive Autonomous Networks (CAN) in radio access networks (such as the 5G radio part) and other (future) generations of wireless/mobile networks.

Specifically, the following considers the use of intents in managing networks, and further considers intents in the context of declarative and imperative commands.

In more detail, owing to the complexity of networks, there is always push for more automation and abstraction. One recent solution for the abstraction is through the use of intents in what may be termed Intent-Based Networking (IBN). This mechanism aims to enable a network to be able to respond to user's or operator's intents without the user/operator specifying the technical details of how his intended outcome may be realized.

In general, in a declarative command approach, you say what you want the state of the system to be but not how. The engine that implements the declarative definition is responsible for turning the what into the how. In contrast, in an imperative approach, you don't define what to achieve, just how to achieve it. So, for example, a declarative instruction/command may be an address (and any appropriate means may be used to allow you to get to that address), while an imperative instruction/command may tell you how to get to that address via a single specific route (e.g. walk 200m north, catch bus 320 and ride 8 stops, etc.). The initial state/starting point must be defined for the imperative instruction.

This is more complicated when applied to system intents, as an intent is a more ambiguous statement of a state in which a system is desired to be.

From an operator's perspective there can be very many kinds of intents, from simple intents that can be fulfilled with a single command on a specific network object to very complex intents that include multiple network nodes and several commands on several network objects. Since the state of the system can be expressed in terms of the configurations or the outcomes, any statement that expresses what the system shall be in an intent. This can be reflected through the use of a verb, as shown in the following list of example intents:
1. Collect/get Carrier Aggregation statistics for all cells in city X.
2. Restrict/deny handovers of high mobility users to small cells
3. Allow load balancing to a cell Y or to small cells or to only urban cells
4. Rehome a base station from controller A to controller B.
5. Create a network slice of type Internet of Things

**AII** of these intents comprise a verb (e.g. "collect", "restrict", "allow", "create", etc.) that states what state the system shall be in. This list thus states what the system is desired to be in using verbs, which allows the statements to be concise. In all these, there is no statement for the specific actions needed to achieve this outcome. Stating the outcomes in an imperative form is concise which is the reason why many operators will be expecting to use imperative structures to state their intents

From the above, it is evident that an intent may be said to be a statement of the desired state of the system. Further, based on the above example intents, a generic model of an intent may be modeled as a tuple of verb Object and optional parameters and context. This is illustrated by the following hash function, which is also called an imperative intent. Contrary to a regular imperative command/instruction, an imperative intent does not fully express how the imperative intent is to be carried out, and is thus ambiguous.

```
                    Verb: a_verb;
                    Object: a_network_object;
                    Context {
                            context1: context1_value
                                      :
                            context1: context1_value
                            }
                    Parameters {
                            parameter1: parameter1_value
                            parameter1: parameter1_value
                                      :
                            }
```

The following provides a mechanism that aims to translate an intent modelled using such an ambiguous imperative structure into a less ambiguous declarative format that can be more easily and objectively fulfilled by intent fulfilment systems. In general, the imperative intent may be seen as providing an overall objective for an object, and the declarative intent may be seen as providing at least one target for achieving that overall objective. The declarative intent may be expressed so that the tactics used for achieving those targets may be determined by a management service that receives the declarative intent. The management service that receives the declarative intent comprising those targets may determine the tactics for achieving those targets.

In 3GPP systems, there has not been a system proposed for translating imperative intents to declarative intents. In fact, there are no known models of imperative and declarative intents in 3GPP networks so there has not been any need to translate between them. The standards are yet to agree on the nature of modelling an intent. However, whichever model they choose it will be likely to translate from one format to the other given that user interfaces are likely to use an imperative format while implementation systems are likely to use the declarative format.

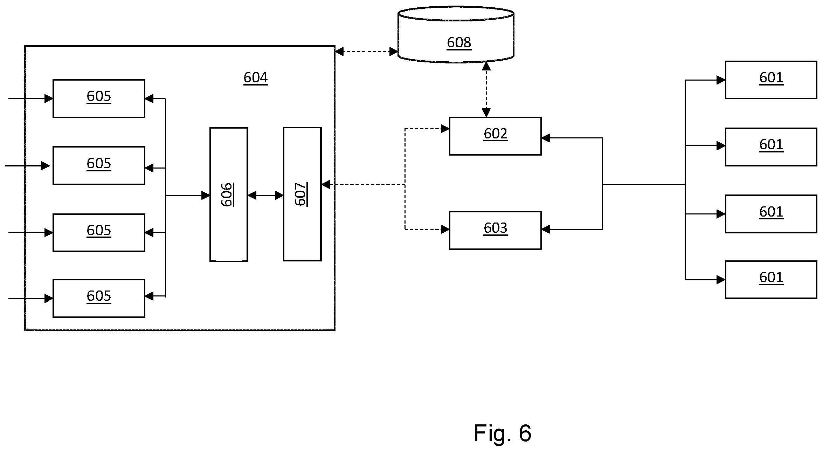

Figure 6 illustrates an example end-end system for intent driven managed networks.

Figure 6 shows a plurality of network functions 601 arranged to exchange signalling with an intent fulfillment system 602 and an intent assurance system 603. The network functions may be, for example, an energy saving-based network function, a carrier aggregation-based network function, a traffic steering-based network function, a handover optimization-based network function, and the like.

The Intent Fulfillment system and the intent assurance system 603 exchange signals with an intent modeler 604. This intent modeler may receive an input of instructions from at least one parser 605, which are passed to a correctness and completeness checker 606 and an authenticator 607 before being provided to the Intent Fulfillment system and the intent assurance system 603. The input may be received via at least one of a Graphical User Interface (GUI), a command line interface (CLI), a text-based instruction, and/or an audio-based instruction. The intent fulfillment system 602 and the intent modeler 604 may access an intent catalogue database 608 for determining how to express the intent.

The system of Figure 6 assumes the imperative intent model described above, which is stated at the user interfaces and checked for completeness, correctness and for authentication before it is submitted to the intent fulfilment and assurance systems.

The following proposes a method for translating imperative intents into declarative intents that can easily be fulfilled before they are passed to an entity for performing those intents. In the present instance, the declarative intent expresses specific targets which can then be related with automation functions to achieve them. Imperative intents can be directly related to automation functions or actions thereof.

Specifically, the following proposes a declarative intent model that allows any intent to be objectively modelled via a set of Information Object Classes (IOCs) that then enables the management of the Intent via a related managed Object instance. An IOC represents an interface description language, which is any computer language used to describe a software component's interface, in Abstract Syntax Notation 1 (ASN.1).

**An** extended imperative intent model may then be formed by adding a verb to the declarative model to minimize the need for the intent consumer to have to completely define the full features of the declarative intent while still allowing the intent to be fully defined and managed. This is because using verbs avoids stating every aspect that would be required in the declarative form. For example, aspects of the imperative form have to be translated into features of the declarative form, e.g. "rehome" to mean " homeRNC =" or "CBD" ("Central business district") to mean "location = city center". The conciseness of the presently described imperative form allows it not to fully state the features but state the intent in a way that the features can be derived by an intent translation function.

Consequently, an Intent Translation Function (ITF) may subsequently translate the ambiguous imperative intent into an unambiguous declarative intent. The ITF may interpret a verb to identify objects of the declarative intent. The ITF may also interpret terms used for filter information to identify the specific managed Objects for a given imperative or declarative Intent expectation. The ITF may be implemented using a natural language processing mechanism that interprets human words into the appropriate terms and values of the declarative Intent expectation. The ITF may also be simple implemented as a look table that matches the human terms to the appropriate terms and values of the declarative Intent expectation.

The provided mechanism may also allow for a secondary intent completeness and correctness check to be performed subsequent to the intent translation checks for the completeness and correctness of the declarative Intent expectation. This check may be performed on the newly translated instructions.

The described IFT may be located between the intent specification platforms and the intent fulfillment and assurance systems (see **Error! Reference source not found.** 7), the ITF as well its completeness and correctness check may be implemented either as part of the intent specification platforms, as part of the intent fulfillment and assurance systems, or independent of two systems (i.e., as standalone functions between the two systems).

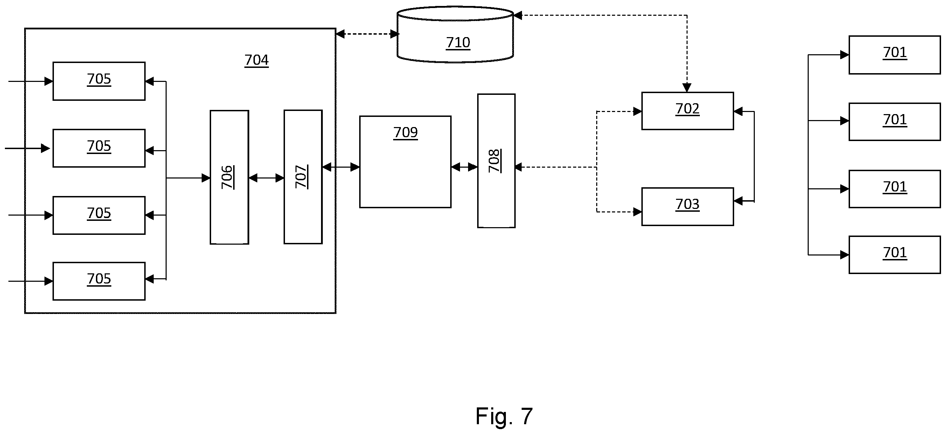

Figure 7 illustrates an example end-end system for intent driven managed networks.

Figure 7 shows a plurality of network functions 701 arranged to exchange signalling with an intent fulfillment system 702 and an intent assurance system 703. The network functions may be, for example, an energy saving-based network function, a carrier aggregation-based network function, a traffic steering-based network function, a handover optimization-based network function, and the like.

The Intent Fulfillment system and the intent assurance system 703 exchange signals with a correctness and completeness checker 708, which exchanges its own signals with an intent translation function 709. The intent translation function 709 exchanges signals with an intent modeler 704. This intent modeler 704 may receive an input of instructions from at least one parser 705, which are passed to a correctness and completeness checker 706 and an authenticator 707 before being provided to the Intent translation function 709. The input may be received via at least one of a Graphical User Interface (GUI), a CLI, via text, and/or via audio. The intent fulfillment system 702 and the intent modeler 704 may access an intent catalogue database 710 for determining how to express the intent. In this system, the intent modeler 704 may be considered as forming an imperative intent model, while the intent translation function 709 and the correctness and completeness checked 708 may be considered as forming a declarative intent model.

First, an atomic intent is considered, which reflects an intent for a given entity or object.

The basic requirement for an atomic intent is that a given entity or object gets to be in specific state, where an object refers to a managed object within a network. In other words, an intent may be expressed as:
"ensure that Object O is in state S"

This is a declarative form of stating the intent as it is a target to be achieved by an object.

The state of the system may be expressed in terms of the parameter values used to control the object, the measurable key performance indicators (KPIs) for that object or some abstract index that expresses the behavior of the object. The state may also be context specific. In other words, the intent may require a specific state given a specific context. As such with the state as a combination of parameters, KPIs and context, the intent may be stated as:

```
 "ensure that for
       Object O,
       parameter_1 is parameter_1_value, ...., Parameter_n is parameter_n_value;
       KPI_1 is KPI_1_value, ...., KPI_m is KPI_m_value;
       context_1 is context_1_value, ...., context_k is context_k_value;
 "
```

The value for each of the state attributes (parameters, KPIs and context) may equal a specific value or a constraint to a single value or a range of values. The combination of state attribute, the condition constraining the attribute and the value or value range for the attribute is the target, i.e. the target is the tuple
target = [attribute, condition, value range]

Example targets are listed in Table 1, which lists, for each object, a target being controlled, an object state attribute being covered, a condition for the target to obtain, and a value/value range constraining the target. In this table, the range of values may indicate targets that change with different contexts, so all one has to do is express the intent with multiple contexts.

**Table 1: Example intent targets for different Objects**

| **Object** | **Type of target** | **Object State attribute** | **Condition** | **Value range** |
|---|---|---|---|---|
| Slice | Parameter target | Coverage area | Is at least | 40km radius |
| Communication Service | KPI Target | User throughput | Is greater than | 2Mbps |
| Communication Service | Context Target | Time of day | Is within | 6:00 hrs, 22:00 hrs |

Second, an intent that impacts multiple types of objects is considered. This may be the case for different objects, for example, when an intent may express multiple parameter-, KPI- and context- targets to be fulfilled in parallel.

This intent that includes targets on multiple types of Objects that are to all be fulfilled in parallel is referred to herein as an aggregate intent. To distinguish between the atomic intent on a single object or type of object and the aggregate Intent involving multiple types of objects, the former may be called an expectation so that an intent is modeled as a set of expectations, where the set may be larger than one. It follows then that an Intent is a list of expectations each of which applies to a single managed object or type of object. The set of expectations may be desired only for given specific contexts, i.e., the intent may be to deliver the list of expectation when certain contexts evaluate to True. The intent may thus be modelled as a class, where the *Intent IOC* includes the following attributes, where "T" represents "true", and "F" represents "false":

**Table 2: Attributes of the Intent IOC**

| **Attribute Name** | **isReadable** | **isWritable** | **isInvariant** | **isNotifyable** |
|---|---|---|---|---|
| intent Identifier | T | F | T | T |
| intentExpectations | T | T | F | T |
| IntentContext | T | T | F | T |

Although there are contexts for the entire intent, there may be contexts that are applicable to specific intent expectations. This means that a common context model can be developed. In this case, it may be specified whether a given context applies to the entire intent or to a part thereof (e.g. a single or multiple defined expectations). As such the concept of context is spread throughout the object that make up the intent.

In the following, an IntentExpectation is the statement on the desired state of a specific managed Object or objects of the same type expressed as a list of targets on that Object or objects, where the target may be at least one of parameter value(s), KPI value(s), and/or context value(s). The specific list of targets provided in an IntentExpectation may be desired to be achieved for given contexts. In other words, besides the Target, an expectation may state a list of contexts which, when they evaluate to True, are to drive the listed targets to be achieved. The IntentExpectation may be thus be modelled as a class, where the IntentExpectation IOC comprises at least one of the following attributes of Table 3.

**Table 3: Attributes of the declarative IntentExpectation IOC**

| **Attribute Name** | **isReadable** | **isWritable** | **isInvariant** | **isNotifyable** |
|---|---|---|---|---|
| Expectation Identifier | T | F | T | T |
| intentObject | T | T | F | T |
| intentTargets | T | T | F | T |
| Expectation Context | T | T | F | T |

In one example, the declarative Intent Expectation IOC may be configured to comprise at least the ExpectationIdentifier, the IntentObject, and the IntentTargets. In this example, the ExpectationContext may be considered an optional field. It is understood that, in addition or in the alternative to providing context in the ExpectationContext field, context for the Expectation may be provided in at least one of the other fields, as discussed further herein.

Although context and targets have the same structure, to distinguish between what must be achieved (target) and the context (conditions under which the target is to be achieved), the context may be explicitly stated separately from the target (although it is understood that a target itself may comprise a context that is separate from the context being applied to the Expectation). For example, the consumer may wish to achieve a Radio Link Failure rate (RLF) of less than 2% when the load is more than 50%. If the context (i.e. load > 50%) is not explicitly stated/modelled as context, the producer could interpret the request to mean RLF<2% and load > 50%, i.e. that the load should be caused to become over 50%.

The following also discloses an IntentObject. An IntentObject is a specific managed object instance or collection thereof for which the specific targets are to be achieved/applied. Although it is possible, in some cases, to state the object using its identifier, it is not always adequate for all possible intents. Instead, the user may state a type of object and provide filter information that may be used to identify the appropriate object(s) under reference. The filter information may be provided in the form of a contextList whose entries are each a tuple (attribute, condition, value range). This structure may be applicable to all scenarios including the case of a single specific object, for which the filter information may simply be the tuple (identifier, = , ObjectIdentifier). The IntentObject may thus be modelled as a class, where the IntentObject IOC comprises at least one of the following attributes of Table 4.

**Table 4: Attributes of the IntentObject <<datatype>>**

| **Attribute Name** | **isReadable** | **isWritable** | **isInvariant** | **isNotifyable** |
|---|---|---|---|---|
| ObjectType | T | F | T | T |
| ObjectContext | T | T | F | T |

An IntentTarget is a tuple of object state attribute, a condition expressing the limits of the values of the state attribute and a value range applicable to that state attribute. However, a given tuple may only be desired to be applicable in specific contexts even though the full set/list of targets may have a different context. The IntentTarget may thus be modelled as a class, where the *IntentTarget IOC* comprises at least one of the following attributes of Table 5.

**Table 5: Attributes of the IntentTarget <<datatype>>**

| **Attribute Name** | **isReadable** | **isWritable** | **isInvariant** | **isNotifyable** |
|---|---|---|---|---|
| ObjectStateAttribute | T | F | T | T |
| TargetCondition | T | T | F | T |
| TargetValueRange | T | T | F | T |
| TargetContext | T | T | F | T |

The contexts, as applicable to the above-described *Intent,* the *IntentExpectation,* the *IntentObject* and/or the *IntentTarget IOCs* may all have the same structure. In all cases, the context may be a tuple of an attribute, a condition expressing the limits of the values of the attribute and the value range applicable to that attribute.

A context attribute may apply to the object/entity being managed. For example, for a managed object like a cell, the attribute may be a characteristic like a parameter or KPI of the managed object, say transmit power or Random-Access Failure Rate for a cell. The attribute may, however, also be a characteristic that is only logically related to the entity. For a managed object like a cell for example, the attribute may be a feature of the weather, an identifier of the location where the object (cell) is installed. The *context IOC* may thus be modelled as a class, where the *context IOC* includes the following attributes of Table 6:

**Table 6: Attributes of the context «datatype»**

| **Attribute Name** | **is Readable** | **isWritable** | **isInvariant** | **isNotifyable** |
|---|---|---|---|---|
| ContextAttribute | T | F | T | T |
| ContextCondition | T | T | F | T |
| ContextValueRange | T | T | F | T |

For many intents, defining the state of the system may be hard. Instead the consumer of the intent based management service (MnS) may simply state an imperative request that tells the Intent Driven Management System (IDMnS) what should be achieved.

For example, to request that no energy saving should be executed for a given cell stating this declaratively is hard, since either the user has to know the parameters that manage energy saving in the cell for the user to be able to state their desired values and/or the user has to know the metrics to which energy saving contributes so that for the user to set values for these metrics which are then interpreted by the system to then disable energy saving.

**As** another example, consider that a service management platform needs to request for the increase of transport resources for a given cell supporting a particular transport network, where the cell has been found to have a congested transport path. To make such a request declaratively, the service management platform may express this in at least one of three ways:
**1)** "Ensure that congestion to cell xzy is less than 50%". This expression implies that the transport service knows what cell xyz is, which is the kind of information that is not tracked by the transport network
**2)** "Ensure that congestion on path trans_xzy is less than 50%", where trans_xzy is a label for a particular transport path. This expression assumes (as does case 1 above) that the transport network tracks the congestion of services caried over the paths which is not always the case
**3)** "Add transport capacity to the path trans_xzy". This expression is concise and makes few assumptions on the capabilities of the transport network while stating exactly what the service management needs to see done. Moreover, it leaves the responsibilities of figuring out whether the service is experiencing congestion to the service management system

**As** such it is easier and typically more concise for the user to state the intent imperatively, e.g. to request the system to "disable HOs for a group of users" or "disable energy saving for certain cells".

As discussed above, the imperative request may comprise a task of verb that is to be undertaken. The imperative request may further comprise an object but in many cases the object cannot be stated simply with an identifier. Instead, as discussed herein, the user may state a type of object and provide filter and/or context information that may be used to identify the appropriate object under reference. Similarly, the user may state a list of targets with contexts (and constraints) under which those targets should be achieved.

Consequently, the imperative Intent Expectation may be modelled as a class whose members are a verb on an Object with Optional and targets with contexts. This is illustrated in Table 7 as attributes of the *IntentExpectation IOC.*

**Table 7: Attributes of the imperative IntentExpectation IOC**

| **Attribute Name** | **isReadable** | **isWritable** | **isInvariant** | **isNotifyable** |
|---|---|---|---|---|
| Expectation Identifier | T | F | T | T |
| intentVerb | T | T | F | T |
| intentObject | T | T | F | T |
| intentTargets | T | T | F | T |
| IntentContext | T | T | F | T |

The usage of a verb in an intent expectation makes the target list optional since it is possible to state a desired imperative action on an object without any applicable targets. For example, for the request to "add transport resources to for cell xyz" may be stated as "< expand > < the transport path to cell xyz >", which only identifies the verb and object without any targets.

Intent model relationships considers model relationships that express how models are intended to constrain one another.

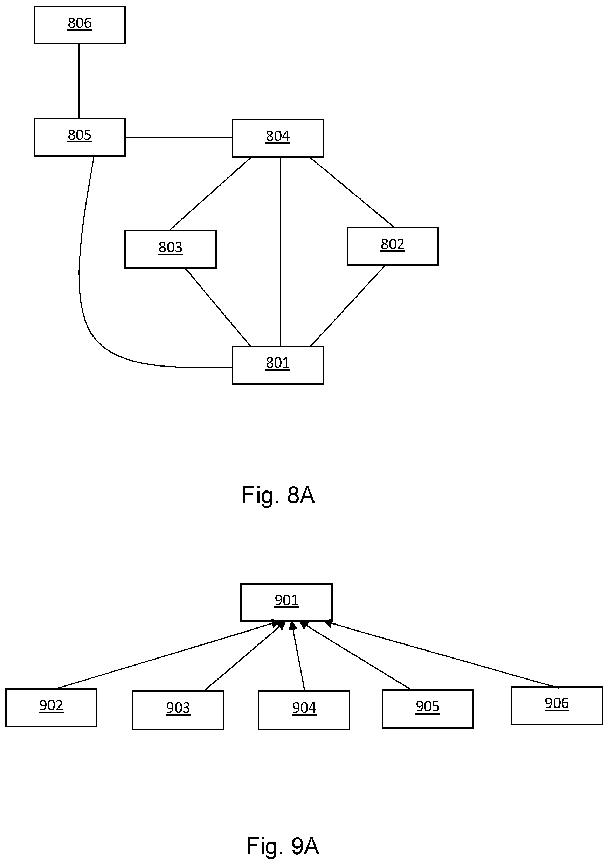

This is illustrated with respect to Figures 8A and 9A.

Figure 8A illustrates constraints that may exist between a context IOC 801, an IntentObject IOC 802, an IntentTarget IOC 803, an IntentExpectation IOC 804, an Intent IOC 805 and a Managed Entity 806 of the intent 805. The Managed entity 806 may be, for example, a subnetwork, a managed function and/or a management function.

The connections between the different entities in Figure 8A represent the constraints arising from the interconnection between different IOCs discussed herein.

As can be seen from the Figure, the Managed Entity 806 is constrained by the Intent IOC 805, which is in turn constrained by both the IntentExpectation IOC 804 and the IntentContext IOC 801. The IntentExpectation IOC 804 is constrained by the IntentContext IOC 801, IntentTarget IOC 802, and the IntentObject IOC 803. The IntentTarget IOC 802 and the IntentObject IOC 803 are also further constrained by the IntentContext IOC 801.

Figure 9A illustrates a top IOC 901 that comprises an Intent IOC 902, an IntentExpectation IOC 903, a IntentContext IOC 904, an IntentObject IOC 905, and an IntentTarget IOC 906.

Table 8 summarizes some of Intent Model Attributes discussed above.

**Table 8: Definition of Intent Model Attributes**

| **Attribute Name** | **Documentation and Allowed Values** | **Properties** |
|---|---|---|
| intentIdentifier | A user-friendly (and user assignable) name of the intent. | type: String multiplicity: 1 isOrdered: False |
| | allowedValues: Not Applicable | isUnique: False defaultValue: None isNullable: False |
| intentExpectation | It describes the list of specific outcomes desired to be realized for specific objects | type: List multiplicity: 1 isOrdered: False |
| | allowedValues: Not Applicable | isUnique: False defaultValue: None isNullable: False |
| IntentContext | It describes the list of constraints and conditions that should apply for the entire intent even if there may be specific constraints and conditions defined for specific parts of the intent. | type: List multiplicity: 1 isOrdered: False |
| | | isUnique: False defaultValue: None |
| | allowedValues: triple of (attribute, condition, value range) | isNullable: False |
| intentExpectationIdentifier | A user-friendly (and user assignable) name of the intentExpectation. | type: String multiplicity: 1 isOrdered: False |
| | | isUnique: False defaultValue: |
| | allowedValues: Not Applicable | None isNullable: False |
| intentObject | It describes the target Managed object or the set or group thereof for which one or a prurality of intentTargets shall applied. There is only intentObject for each intentExpectation. Examples for entities for an object are instances of the NRM objects or groups of such instances. | type: Object multiplicity: 1 |
| | | isOrdered: False |
| | | isUnique: False defaultValue: None |
| | | isNullable: False |
| | allowedValues: Not Applicable | |
| intentTarget | It describes the list of specific outcomes on configurations and observables related to the stated intentObject (e.g. parameters, gauges, counters, KPIs, etc) that are desired to be realized for a given intentExpectation. | type: List multiplicity: 1 |
| | | isOrdered: False |
| | | isUnique: False defaultValue: None |
| | | isNullable: False |
| | allowedValues: Not Applicable | |
| ExpectationContext | It describes the list of constraints and conditions that should apply for a specific intentExpectation. Note there may be other constraints and conditions defined for the entire intent or for specific parts of the intentExpectation. | type: List multiplicity: 1 |
| | | isOrdered: False |
| | | isUnique: False defaultValue: None |
| | | isNullable: |
| | allowedValues: triple of (attribute, condition, value range) | False |
| ObjectType | It describes the type of managed object to which the given intentExpectation should apply. It is used together with the ObjectContext to identify the specific entity to which the intentExpectation should apply. E.g. the intentExpectation may be stated for a slice (type of Object) with identitier IIOT_Atomotive_2021 (identifier as context). Alternatively, the intentExpectation may be stated for a slice (type of Object) serving IIoT users (context 1) with slice profile supporting automotive connectivity (context 2). | type: Object multiplicity: 1 |
| | | isOrdered: False |
| | | isUnique: False defaultValue: None |
| | | isNullable: False |
| | allowedValues: Inofrmation Object Classes | |
| ObjectContext | It describes the list of constraints and conditions to be used as filter information to identify the specific intentObject to which a given intentExpectation should apply. Note there may be other constraints and conditions defined either for the entire intent, for the specific intentExpectation or for the intentTarget of the considered intentExpectation. | type: List multiplicity: 1 |
| | | isOrdered: False |
| | | isUnique: False defaultValue: None |
| | | isNullable: False |
| | E.g. the intentExpectation may be stated for a slice (type of Object) with identitier IIOT_Atomotive_2021 (identifier as context). Alternatively, the intentExpectation may be stated for a slice (type of Object) serving IIoT users (context 1) with slice profile supporting automotive connectivity (context 2). | |
| | allowedValues: triple of (attribute, condition, value range) | |
| ObjectStateAttribute | It describes a specific attribute of a managed object on which an outcomes may be stated, either a configuration or observable of that managed object. The attributes may be a parameter, gauge, counter, KPI, weighted metric, etc. related to that managed object | type: Object multiplicity: 1 |
| | | isOrdered: False |
| | | isUnique: False defaultValue: Null |
| | | isNullable: True |
| | allowedValues: parameter, gauge, counter, KPIs or weighted metrics of managed objects | |
| TargetCondition | It expresses the limits within which the ObjectStateAttribute is allowed/supposed to be | type: enum multiplicity: upto 2 |
| | allowedValues: is equal to; is less than; is greater than; | isOrdered: False |
| | | isUnique: False defaultValue: "is equal to" |
| | Note: Others conditions like "is within the range" or "is outside the range" can be expressed in terms of these basic conditions | |
| | | isNullable: False |
| TargetValueRange | It describes the range of values that applicatioble to the ObjectStateAttribute and the TargetCondition. | type: enum multiplicity: upto 2 |
| | | isOrdered: False |
| | | isUnique: False defaultValue: Null |
| | | isNullable: True |
| TargetContext | It describes the list of constraints and conditions that should apply for a specific intentTarget. Note there may be other constraints and conditions defined for the entire intent or the intentExpectation. | type: List multiplicity: 1 |
| | | isOrdered: False |
| | | isUnique: False defaultValue: None |
| | allowedValues: triple of (attribute, condition, value range) | isNullable: False |
| Context | It describes the list of constraints and conditions that should evaluate to | type: List multiplicity: 1 |
| | True but are not to be fulfilled by the IDMS. | isOrdered: False |
| | | isUnique: False defaultValue: None |
| | allowedValues: tuple of (ContextAttribute, ContextCondition, ContextValueRange) | |
| | | isNullable: False |
| ContextAttribute | It describes a specific attribute of or related to a managed object or to characteristics thereof (e.g. its control parameter, gauge, counter, KPI, weighted metric,, etc) or an attribute related to the operating conditions of the managed object (szch as weather conditions, load conditions, etc). | type: Object multiplicity: 1 |
| | | isOrdered: False |
| | | isUnique: False defaultValue: Null |
| | | isNullable: True |
| ContextCondition | It expresses the limits within which the ContextAttribute is allowed/supposed to be | type: enum multiplicity: upto 2 |
| | | isOrdered: False |
| | allowedValues: is equal to; is less than; is greater than; | |
| | | isUnique: False defaultValue: "is equal to" |
| | Note: Others conditions like "is within the range" or "is outside the range" can be expressed in terms of these basic conditions | |
| | | isNullable: False |
| ContextValueRange | It describes the range of values that explicatable to the ContextAttribute and the ContextCondition. | type: enum multiplicity: upto 2 |
| | | isOrdered: False |
| | | isUnique: False defaultValue: Null |
| | | isNullable: True |
| intentS tate | It describes the administrative state of the intent. | type: Object multiplicity: 1 |
| | | isOrdered: F |
| | allowedValues: "Active", "Inactive", | isUnique: F defaultValue: None |
| | | isNullable: False |
| intentVerb | It describes the task that needs to be undertaken for achieving a certain intentExpectation. | type: String multiplicity: 1 |
| | | isOrdered: F |
| | allowedValues: varies depending on the intentObject | isUnique: F |
| | | defaultValue: None |
| | | isNullable: False |

The ITF that translates between the intents may be implemented as a standalone entity, as part of the specification platform or as part of the fulfilment systems, as discussed above. The ITF may be implemented using a natural language processing algorithm or as a look up table that matches the terms to the appropriate fields in the model. The following discussion focusses on the look up table implementation.

As a default, an imperative intent expectation implies that by using some terms (e.g., by using a verb), not all the fields of the intent expectation model (as expected for declarative intent expectations) need to be fully stated. As such for a given imperative intent expectation, the ITF needs to interpret the fields of the imperative intent expectation into the appropriate fields of the declarative intent expectation. Table 89 shows examples of imperative intent expectations, their declarative equivalents and the tasks are to be accomplished by the ITF to effectively translate the imperative intent expectations into their declarative equivalents.

**Table 9: Example imperative intent expectations, their declarative equivalents and the required capabilities of the ITF needed to support the translation**

| **Intent Expectatons** | | **Model** | | **ITF Tasks** |
|---|---|---|---|---|
| **Imperative** | **Declarative (Ensure that..)** | **Object** | **TargetList** | |
| Rehome cell x to RNC B | for Object [cell x]; [RNC is B] | cell | RNC = B | Interpret "Rehome" into "cell attribute, RNC" "is equal to" |
| Avoid Energy Saving (ES) for cells in CBD | for Object [List(cell), Location=CBD)], ES_On=False] | List(cells) | ES_On=False; | Interpret "CBD" as a filter on Object cellList" |
| Restrict ES to Rural cells on week days | for Object [List(cell), Location =Rural), [ES_On=False; Time = Weekdays;] | List(cells) | Time = Week days; ES_On=True | Interpret "Rural" as filter to create List(cell); and "week days" as context for ES_On=False |
| Create a network slice of type IIoT | for Object [Slice, Filter=new], [SliceProfile=IIoT] | Network slice | SliceProfile=IIoT | Interpret "Create" into "Filter=new" |

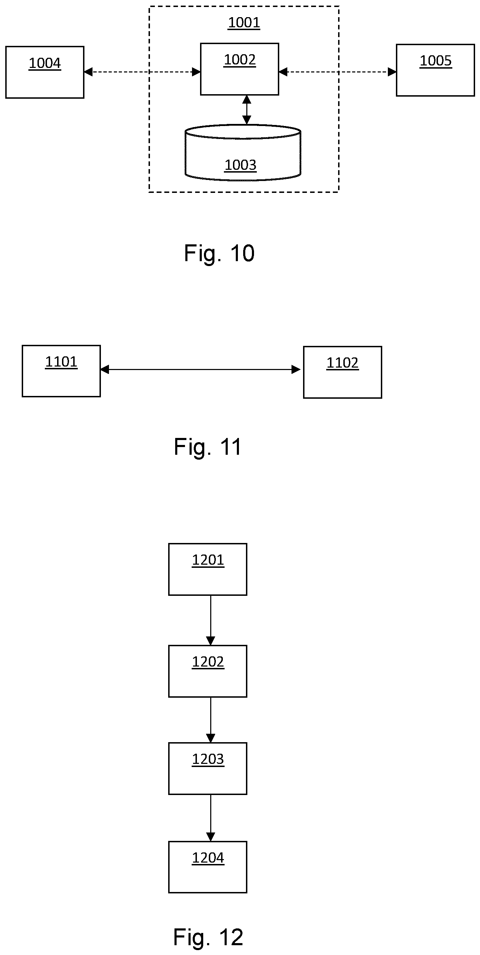

The ITF may be implemented as a single look up table for both verbs and contexts. However, there may be separate look up tables for each of the verbs and the contexts, one that focusses on translating the verbs into targets and the other for the contexts used as filter information to identify objects. In any of these cases the ITF may be implemented similar to the illustration of Figure 10 as a combination of a look up function and database of terms that may be parsed either verbs or contexts.

Figure 10 illustrates an IFT 1001 that comprises a look up function 1002 and a verb context database 1003. The look up function 1002 receives an imperative intent 1004, translates this using the verb-context database 1003, and outputs a declarative intent 1005.

The lookup table being a verb lookup table is considered below.

The ITF verb look table identifies a verb and finds the equivalent meaning of the verb in terms of the targets to be achieved and/or the fields thereof. The verbs are interpreted into intentTargets to be achieved against the object on which the verb is given. The verb may be interpreted into the three fields of a intentTarget.

For example, the verb "rehome" may be interpreted as the target that "the NRM attribute named RNC for NRM object of type cell" shall be "equal to" some value. That means that the verb "rehome" is interpreted into the two fileds of the target i.e.

```
 Rehome = {
      ObjectStateAttribute = "RNC";
     TargetCondition = "is equal to"
     value_range = "the identofied new home"
 }
```

As another example, a single verb may be interpreted into multiple intentTargets connected by a logical operation, such as "OR", "AND", etc.

The definition of a given term may be generic. In other words, the meaning may apply to multiple kind of objects, targets or operation. Alternatively the verb may have multiple interpretations in different contexts. For example, the verb "improve" may imply to " make a KPI smaller" if the KPI is to be minimized, or to "make a KPI bigger" if the KPI is to be maximized.

In other cases some terms may be defined in a very specific way to a given object, target, operation.

Table 10 gives example of verbs that may be used to state imperative intentExpectations and their equivalent translations into intentTargets for the declaratcive intentExpectations.

**Table 10: Example look up table for verbs**

| Term | Implementation | | | |
|---|---|---|---|---|
| | Logical operation | Attribute | Condition | Value Range |
| Create | | "Stated Object" | is equal to | True |
| Improve | | KPI for the said object | Is gretaer than or Is less than | "current value" |
| Restrict | | | | |
| Avoid | | Attribute "xx_isON" or "xx_isActive"for the said object | is equal to | False |
| Rehome | | Attribute RNC for object cell | is equal to | "The given value" |

**The** following considers an example ITF context look table. An ITF context look table identifies a context term and finds the equivalent meaning of the term in terms of the contexts to be considered either to identify an object or to conditon the intent, expectation or target.

The contexts to be parsed my apply to an intentObject - e.g. CBD, which relates to the location of the object. The contexts may also or alternatively apply to an intentTarget, and/or an intentExpectation, and/or the entire intent. For example, a time-based context, such as a busy hour and/or weekend, may indicate that the specific intentTarget, intentExpectation or intent associated with that context should only be ensured during that time period.

A term may be interpreted into the three fields of a context. For example, CBD = { attribute = "location", condition = "is equal to"; value_range= "city centre" } may be an appropriate translation. A term may also be interpreted into multiple context entries combined via a logical operation.

Table 11 gives example of terms that may be used to state abstract contexts and their equivalent translations into Contexts for the declarative intentExpectations.

**Table 11: Example look up table for contexts**

| Term | Implementation | | | |
|---|---|---|---|---|
| | Logical operation | Attribute | Condition | Value Range |
| CBD | | Location | is equal to | City centre |
| Rural | | Location | is equal to | Not City centre |
| Weekdays | AND | Day | is equal to | Monday - Friday |
| | | Time | is equal to | 00:00 - 23:59 |
| Weekend | AND | Day | is equal to | Saturday - Sunday |
| | | Time | is equal to | 00:00 - 23:59 |
| Busy hour | OR | Time | is equal to | 09:00 - 11:30 |
| | | Time | is equal to | 19:00 - 21:00 |

To support Intent Driven Network and Service Management, a Management function or managed function may implement an Intent Driven Management Service (IDMnS). This Management Service may be consumed by other functions and entities to instantiate Intents that may need to be fulfilled.

The intent models may be used as the information objects that enable the interaction between the consumers and the producer of the IDMnS. This allows the consumers to create and manage intent objects to be fulfilled by a given Management function or managed function (here simply referred to as the Producer of the IDMnS). A user or another management function may consume/use the Management Service to create and manage intent objects instantiated on the producer of the IDMnS. This arrangement is illustrated by Figure 11.

Figure 11 illustrates a first management function or user interface 1101 configured to operates as an IDMnS consumer to the second management function or managed function 1102, which operates as an IDMnS producer to the first management function or user interface 1101.

The IDMnS consumer and producer may in principle be only subfunctions of the respective management function or managed function. In other words, the entire function is not considered the consumer/producer but only the part that interacts with external parties via the IDMnS Application programming Interface (API) may be considered the consumer/producer of the IDMnS service.

Examples operations at the IDMnS may include the consumer requesting for a new intent object to be instantiated at the producer without requesting that it be fulfilled. For example, it may be requested and marked with indications of the type of entities that may trigger its fulfilment, requesting that an existing intent be fulfilled, requesting that an existing intent be deleted, and requesting the fulfillment of an existing intent to be terminated (i.e. an intent currently in the process of being fulfilled is abandoned).

Relatedly, examples operations at the IDMnS may include the producer informing the consumer of the successful creation of a new intent object or the fulfilment status of an existing intent object.

The respective intent operations via the IDMnS may apply the one of the two intent models with the appropriate values for the prosed attributes. Correspondingly, the ITF may be implemented as a standalone entity, as an entity on the IDMnS consumer side, or as an entity on the producer side. When implemented on the consumer side, the consumer may use the declarative model to express their intents towards the producer. When implemented on the producer side on the other hand, the consumer may the imperative model to express its intents towards the producer, and the producer performs the assessment of what it to be performed. This latter configuration is likely to be used when the consumer is a human user.

All the desired operations on the intents, the intent models may need to be extended with the extra attributes to support specific operations. e.g. The attribute "administrative_State" needs to be added to the intent, IntentExpectation and IntentTarget lOCs if the operation to disable any of them is to be supported using the CRUD (Create, Read, Update, Delete) API operations.

The proposed model allows the following operations to be fulfilled via the standards Create Read Update Delete operations executed via the Intent Driven Management Service:

**Table 12 Example CRUD operations**

| **Desired operation** | **Possible implementation using the Prov. MnS APIs** | **Implication on the model** |
|---|---|---|
| Submit a new intent to the management system as a candidate list of requirements to be fulfilled | Achieved via the CreateMOI call as: CreateMOI (Intent_IOC, Intent_attributes) | |
| Request a specific Intent already submitted into the system to be fulfilled | Achieved via the UpdateMOI call as: UpdateMOI (Intent_IOC, administrative_State=unlocked) | The attribute "administrative_State " needs to be added to the intent |
| | | The default value of "administrative_State " should be "LOCKED" |
| Remove an existing intent which the user is no-longer interested in | Achieved via the DeleteMOI call as: DeleteMOI (Identifier=specific_Intent_MOI_identifie r) | |
| Disable or suspend a specific IntentExpectatio n or IntentTarget | Achieved via the UpdateMOI call as: UpdateMOI (Identifier=specific_Intent_MOI_identifie r, IntentExpectation=specific IntentExpectation_identifier, administrative_State=unlocked) Similar call for Same for the IntentTarget | The attribute "administrative_State " needs to be added to the IntentExpectation and IntentTarget lOCs |
| | | The default value of "administrative_State " should be "LOCKED" |
| Check the fulfilment status of an intent, i.e. whether it has been fulfilled or not | Achieved via the ReadMOI call as: ReadMOI (Identifier=specific_Intent_MOI_identifier) | The MnS producer may return a notification showing the value of the fulfillment status |
| | | An attribute for the fulfilment status indicator needs to be added to the intent model |

The above provides an example declarative intent structure for enabling an entity to provide a first intent to a system in the form of an objective to be achieved for a network, and for that received first intent to be translated into a second intent that is expressed in the form of network targets for achieving that objective.

However, it is understood that the presently disclosed ideas are not limited to only that configuration. The following presents an extra example of how the declarative structure may be formed while still achieving this technical effect.

In the present example, the intent expectation is instead structured as a list that comprises context filters on an object type that together identify the object(s) of the intent as well as a set of targets to be achieved for that object. Correspondingly, the context for the expectation can be marked with its respective use either as object filter or as an expectation context.

This leads to the "IntentObject" listed in Table 3 above for the attributes of the declarative *IntentExpectation IOC* to instead be expanded into an ObjectType attribute and an ObjectContext Attribute. This is shown below in Table 3*:

**Table 3*: Attributes of the declarative IntentExpectation IOC**

| **Attribute Name** | **isReadable** | **isWritable** | **isInvariant** | **isNotifyable** |
|---|---|---|---|---|
| Expectation Identifier | T | F | T | T |
| ObjectType | T | T | F | T |
| ObjectContext | T | T | F | T |
| intentTargets | T | T | F | T |
| ExpectationContext | T | T | F | T |

Further, Table 6, which describes attributes of the context datatype is expanded to comprise a ContextType (as illustrated in Table 6*, below), which is newly defined below in Table 13. Table 13 may be considered to be an extension to Table 8.

**Table 6*: Attributes of the context <<datatvpe>>**

| **Attribute Name** | **isReadable** | **isWritable** | **isInvariant** | **isNotifyable** |
|---|---|---|---|---|
| ContextType | T | F | T | T |
| ContextAttribute | T | F | T | T |
| ContextCondition | T | T | F | T |
| ContextValueRanpe | T | T | F | T |

**Table 13: Definition of Intent Model Attributes**

| **Attribute Name** | **Documentation and Allowed Values** | **Properties** |
|---|---|---|
| ContextType | Defines the roles for which a given context shall play. | type: enum |
| | | multiplicity: 1 |
| | | isOrdered: False |
| | | isUnique: False |
| | | defaultValue: None |
| | allowedValues: "ExpectationContext", "IntentContext"} {"ObjectContext", "TargetContext", | isNullable: False |

As mentioned, intent model relationships considers model relationships that express how models are intended to constrain one another.

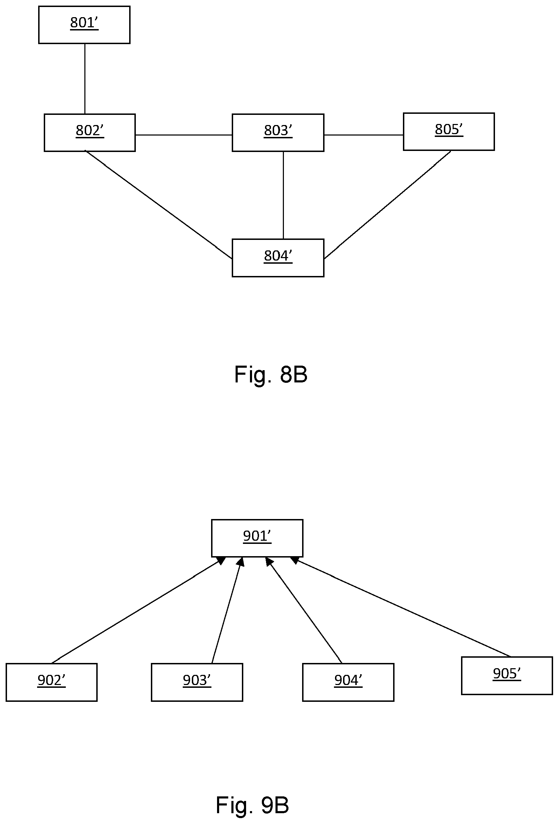

The intent model relationships for this example is illustrated with respect to Figures 8B and 9B.

Figure 8B illustrates a ManagedEntity Proxy class 801' comprising an Intent IOC 802'. The Intent IOC 802' comprises both an IntentExpectation IOC 803' and a context datatype 804'. The IntentExpectation IOC 803' comprises a context datatype 804' and an IntentTarget datatype 805'. The IntentTarget datatype 805' may comprise a context datatype 804'.

Figure 9B illustrates a Top IOC 901' comprising an Intent IOC 902', an IntentExpectation IOC 903', a context datatype 904' and an IntentTarget 905'.

The above provided examples describes elements for enabling an entity to provide a first intent to a system in the form of an objective to be achieved for a network, and for that received first intent to be translated into a second intent that is expressed in the form of network targets for achieving that objective. These elements are described above as being combinable in different forms while still achieving this overall effect. By providing the first intent in the form of an objective, this makes the first intent both easier to define for the entity (i.e. it does not use either memory or processing resources in order to determine any network parameters for affecting that objective) and easier to signal over the network as it uses fewer resources to indicate the intent than if it were more definitely expressed.

Further, by providing a centralised translation function that may translate the first intent into the second intent, this allows for a consistent formatting to be provided to a management services function for determining tactics for obtaining those definitely identified targets. This therefore allows the management services function to streamline its operations as it does not have to itself translate any objectives into targets, and subsequently into tactics. This allows the management services function to save resources, which will be more important as the use of cognitive automation network grows.

Figure 12 illustrates example operations that may be performed by an apparatus for a network function. The network function may provide, for example, at least some form of translation function. The network function may be comprised within a management services function.

**At** 1201, the apparatus receives, from a service consumer configured to operate in a first network, first signalling comprising a first intent that indicates at least one first objective to be achieved in the first network.

**At** 1202, the apparatus determines at least one first target for achieving the at least one first objective. This at least one first target may be as described above in relation to the examples of declarative intent targets.

**At** 1203, the apparatus forms a second intent that comprises the at least at least one target.

**At** 1204, the apparatus signals a first trigger to an intent fulfilment system to fulfil the second intent. The trigger may comprise the second intent and/or a pointer towards the second intent.

Receipt of this trigger may cause the intent fulfillment system to cause the second intent to be fulfilled. This may comprise, for example, determining tactics for achieving the at least one first target comprised within the second intent. This may comprise determining factors in the communication system affecting the at least one first target, and causing a value of a parameter associated with at least one of the determined factors to change for fulfilling the second intent.

**An** objective of the at least one first objective may comprise an identifier of the first intent, an indication of a type of object to which the at least one first objective relates, and an indication of an action to be applied to the object. Different objectives within the at least one first objective may comprise respective identifiers of the first intent, respective identifiers of the type of object to which they relate, and respective indications of an action to be applied to their identified type of object. An object may be considered to be a managed object and/or a managed instance.

Said objective may comprise (e.g. each objective of the at least one first objective may respectively comprise) at least one of an identifier of a context for defining when the objective is to be achieved, and/or an identifier of at least one target associated with the objective. The identifier of at least one target associated with said objective may comprise a tuple identifying: an object state attribute, a condition expressing at least one limit of values of the object state attribute, and a range of values applicable to the object state attribute.

The at least one target associated with the objective may be at least one of a parameter value, and/or a key performance indicator, and/or a context.

When the identifier of the context is comprised in said objective, the apparatus may access a first lookup table to determine at least one target associated with the identified context; and comprise the at least one target associated with the identified context in the second intent.

When the identifier of the parameter value is comprised in said objective, the apparatus may access a second lookup table to determine at least one target associated with the identified parameter value; comprise the at least one target associated with the identified parameter value in the second intent.

When the identifier of the key performance indicator value is comprised in said objective, the apparatus may access a third lookup table to determine at least one target associated with the identified key performance indicator; and comprise the at least one target associated with the identified key performance indicator in the second intent.

The apparatus may receive, from the service consumer, second signalling comprising a third intent that indicates at least one second objective to be achieved in the first network; determine at least one second target for achieving the at least one second objective; form a fourth intent that comprises the at least at least one second target; and signal a second trigger to the intent fulfilment system to fulfil the fourth intent. The second trigger may comprise the second intent and/or a pointer to the fourth intent. The fourth intent may comprise respective and analogous fields to the second intent.

The least one second objective may be a modification of the at least one first objective.

The apparatus may receive, from the service consumer, third signalling, the third signalling comprising an indication that the at least one first objective to be abandoned; and signal, to the management service function, an indication that the at least one first target is to be abandoned in response to receiving said third signalling.

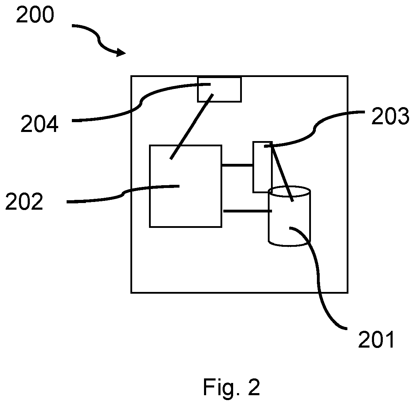

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

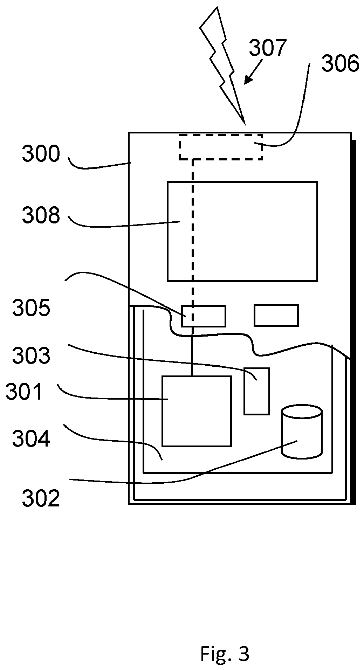

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 305, voice commands, touch sensitive screen or pad, combinations thereof or the like. A display 308, a speaker and a microphone can be also provided. Furthermore, a wireless communication device may comprise appropriate connectors (either wired or wireless) to other devices and/or for connecting external accessories, for example hands-free equipment, thereto.

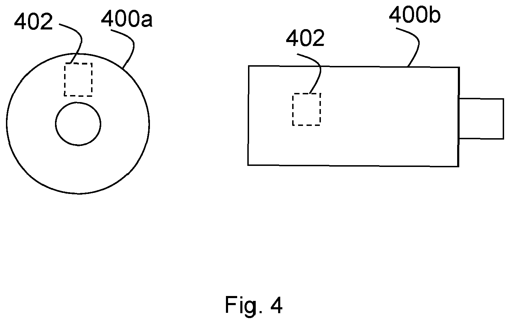

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 12.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 12, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

**The** foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

In the above, different examples are described using, as an example of an access architecture to which the presently described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

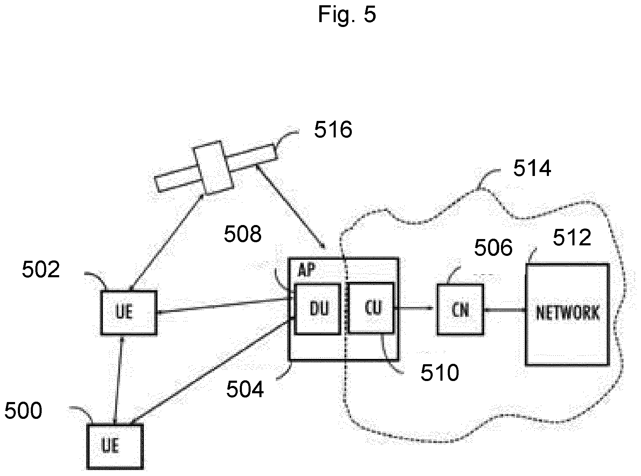

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

**The** examples are not, however, restricted to the system given as an example but a person skilled in the art may apply the solution to other communication systems provided with necessary properties.

**The** example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

**The** device typically refers to a mobile or static device (e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

**5G** enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). The communication system may also comprise a central control entity, or a like, providing facilities for networks of different operators to cooperate for example in spectrum sharing.

**The** technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

**5G** may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. An apparatus for a network function, the apparatus comprising means for:
receiving, from a service consumer configured to operate in a first network, first signalling comprising a first intent that indicates at least one first objective to be achieved in the first network;
determining at least one first target for achieving the at least one first objective;
forming a second intent that comprises the at least one target; and
signalling a first trigger to an intent fulfilment system to fulfil the second intent.

2. An apparatus as claimed in claim 1, wherein an objective of the at least one first objective comprises an identifier of the first intent, an indication of a type of object to which the at least one first objective relates, and an indication of an action to be applied to the object.

3. An apparatus as claimed in claim 2, wherein said objective comprises at least one of an identifier of a context for defining when the objective is to be achieved, and/or an identifier of at least one target associated with the objective.

4. An apparatus as claimed in claim 3, wherein the identifier of at least one target associated with said objective comprises a tuple identifying: an object state attribute, a condition expressing at least one limit of values of the object state attribute, and a range of values applicable to the object state attribute.

5. An apparatus as claimed in any of claims 3 to 4, wherein the at least one target associated with the objective is at least one of a parameter value, and/or a key performance indicator, and/or a context.

6. An apparatus as claimed in any of claims 3 to 5, comprising means for:
when the identifier of the context is comprised in said objective:
accessing a first lookup table to determine at least one target associated with the identified context; and
comprising the at least one target associated with the identified context in the second intent.

7. An apparatus as claimed in any of claims 3 to 6, comprising means for:
when the identifier of the parameter value is comprised in said objective:
accessing a second lookup table to determine at least one target associated with the identified parameter value; and
comprising the at least one target associated with the identified parameter value in the second intent.

8. An apparatus as claimed in any of claims 3 to 7, comprising means for:
when the identifier of the key performance indicator value is comprised in said objective:
accessing a third lookup table to determine at least one target associated with the identified key performance indicator; and
comprising the at least one target associated with the identified key performance indicator in the second intent.

9. An apparatus as claimed in any preceding claim, comprising means for:
receiving, from the service consumer, second signalling comprising a third intent that indicates at least one second objective to be achieved in the first network;
determining at least one second target for achieving the at least one second objective;
forming a fourth intent that comprises the at least at least one second target; and
signalling a second trigger to the intent fulfilment system to fulfil the fourth intent.

10. An apparatus as claimed in claim 5, wherein the at least one second objective is a modification of the at least one first objective.

11. An apparatus as claimed in any preceding claim, comprising means for:
receiving, from the service consumer, third signalling, the third signalling comprising an indication that the at least one first objective to be abandoned; and
signalling, to the management service function, an indication that the at least one first target is to be abandoned in response to receiving said third signalling.

12. An apparatus as claimed in any preceding claim, wherein the apparatus function is comprised within a management service function.

13. A method for an apparatus for a network function, the method comprising:
receiving, from a service consumer configured to operate in a first network, first signalling comprising a first intent that indicates at least one first objective to be achieved in the first network;
determining at least one first target for achieving the at least one first objective;
forming a second intent that comprises the at least one target; and
signalling a first trigger to an intent fulfilment system to fulfil the second intent.

14. A computer program product that, when run on an apparatus for a network function, causes the apparatus to perform:
receiving, from a service consumer configured to operate in a first network, first signalling comprising a first intent that indicates at least one first objective to be achieved in the first network;
determining at least one first target for achieving the at least one first objective;
forming a second intent that comprises the at least one target; and
signalling a first trigger to an intent fulfilment system to fulfil the second intent.
